# EUROPEAN PATENT APPLICATION

(11) **EP 1 923 205 A1**
(43) Date of publication of application: **21.05.2008**
(21) Application number: 07021982.9
(22) Date of filing: 13.11.2007
(51) Int. Cl.: B29C 69/02, B05D 3/12, B29C 59/02

(54) **Process for manufacturing synthetic edging elements for panels and edging element so obtained**

(30) Priority: 16.11.2006 IT MO20060378
(71) Applicant: Flexi-Bord S.P.A., 42045 Luzzara (RE) (IT)
(72) Inventor: Necchi, Luigi, 42045 Luzzara (RE) (IT)
(74) Representative: Cerreta, Caterina

(57) **Abstract**

The present invention relates to a process and embodiments thereof and pertains to the manufacturing of synthetic edging elements to be applied to furniture panels.

## Description

It is an object of the present invention to provide a process for manufacturing synthetic edging elements and the edging elements so obtained.

Techniques for manufacturing edging elements called "paper elements" soaked in thermoplastic or thermosetting resins have been known for many years.

They show good technical properties such as, for example, good stiffness even when thickness is small.

Unfortunately such paper edging elements show some drawbacks:
- during the edging step, when speed is very high, the edging element may break as the working process goes on;
- formaldehyde emission;
- with this type of edging element, gluing problems due to the presence of residual moisture in the body are encountered;
- the melamine body is not compatible with polyurethane glues and requires an additional "primering" step;
- the above mentioned edging elements show low mechanical strength;
- the cutting edge of the paper edging element is likely to absorb dirt from the around; moreover the cutting edge of the edging element is not always the same colour as the panel decor;
- the above mentioned edging elements do not allow a well defined printing;
- with such edging elements few finishes/glosses are possible;
- with paper edging elements there is little chance to differentiate the printing background;
- finally, with paper edging elements not many colours are available.

The main object of the present invention is to overcome the above mentioned paper edging element drawbacks by taking advantage of the properties offered by a novel process for manufacturing particular synthetic edging elements for panels.

Said object is thoroughly achieved by means of a particularly innovative manufacturing process and the embodiment of the products so obtained characterized by what set out in the Claims.

The process, which is the object of the present invention, relates to the manufacturing of synthetic edging elements whose manufacturing steps are as follows:
- the base material is obtained by mixing in a dynamic mixer from 55% to 65% by weight of "high impact shock proof" polystyrene known as HiPS and from 35% to 45% by weight of "crystal" polystyrene. According to the type of product to be manufactured, a variable percentage of "master colour" is added to such a base;
- the material thus yielded is then extruded and calandered on a specific extrusion line for styrene. In this step of the process reels having diameter ranging from 650 mm to 750 mm, height between 650 mm and 700 mm and thickness between 0,1 mm and 2 mm. are obtained;
- the above mentioned reels are then delivered to the next décor printing step, usually wood imitation type, by means of gravure or flexographic type machines;
- the printed reel is then delivered to the finishing step for which an "emboss-painting" machine is used. During this step, a thin acrylic paint layer is applied on the print in order to ensure protection against chemical agents and prevent scratches; the embossing process impresses the surface with a mechanic finish which can be, for example, orange peel type, wax effect, wood pore imitation. As for the painting step, transparent paints having different and predetermined brightness degrees chosen by the customer are used;
- after the finishing step, the reels are delivered to the spreading step where a specific coating called "primer" is applied on their lower surface. The primer will allow the user to glue the finished product by means of EVA glues that is "Ethylene Vinyl Acetate" or polyurethane glues.
- during the last process step the reels are cut into "rolls" having different heights according to the customer's requests depending on the height of the panels to be edged.

An alternative to the above mentioned process, for manufacturing synthetic edging elements for panels, is possible by:
- adding to the basic polymeric compound an amount of Calcium Carbonate corresponding to 20% - 40% by weight of the polymeric compound used.

Again with reference to the manufacturing of synthetic edging elements for panels a further alternative to the basic process initially described is given here below:
- the base material is obtained by mixing in a dynamic mixer from 45% to 55% by weight of ABS, that is "Acrylonitrile butadiene Styrene", and from 45% to 55% by weight of SAN, that is "Styrene Acrylonitrile". This mixture is charged with 20% - 40% by weight of Talcum by means of a rotary twin-screw extruder having a screw contour allowing for the mineral charge dispersion. Finally, in this step, a variable percentage of master colour according to the item manufactured is added.

Both the first process afore mentioned and the possible alternatives stated here below differ for the formula of the material used, the manufacturing process employed and the final aspect of the product obtained.

Through the basic process initially described or through one of its possible listed alternatives, for example, it is possible to obtain products with the following characteristics:
- a synthetic edging element consisting of a HiPS and crystal styrene basic polymeric matrix in percentage from 40% to 60% by weight;
- the above mentioned edging element can be further charged with an inert filler of Calcium carbonate in a percentage from 20% and 40% by weight of the basic polymeric compound used.

What follows is another possible type of edging element obtainable from the basic process or from one of its alternatives illustrated above:
- a synthetic edging element consisting of a ABS and SAN-based polymeric matrix in percentages from 40% to 60% by weight;
- the above mentioned edging element can be further charged with an inert filler of Talcum in a percentage from 20% and 40% by weight of the basic polymeric compound used.

In the last alternative of the process the use of ABS, SAN and Talcum ensures the edging element higher strength.

The edging elements yielded by the basic process previously described or by one of its alternatives, offer a variety of advantages compared to conventional paper edging elements:
- a higher initial tearing resistance, thus allowing high edging speed leaving the cutting and heading systems unchanged;
- no formaldehyde emissions;
- such edging elements do not absorb moisture, are extremely stable even in the presence of climatic variations due to different seasons;
- generally thermoplastic edging elements require the use of a "primer" for gluing therefore the process and the alternatives which are the object of the present invention do not require an additional working step while compatibility between the types of edging elements, which are the object of the present invention and the above mentioned primer is ensured;
- the edging elements manufactured using either the basic process or one of its alternatives described above prove a better impact resistance;
- further the above mentioned edging elements allow for a good print resolution, a wide range of colours for the background printing and they offer the opportunity of realizing colouring according to sample.
- further it is possible to colour the above mentioned edging elements "in bulk", with no limits, with thickness raging from 0,1 mm to 2 mm;
- a better resistance to dirt of the plastic edging element along the "cutting edge", the availability of the entire range of thermoplastic edging element finish for the printed edging elements and then the possibility of manufacturing the cutting edge of the edging element in the same chromatic shade as the panel decor complete the advantages of such edging elements.

Consequently, the types of synthetic edging elements obtainable by making use of the above described basic process or by means of its alternatives listed above, are characterized by providing advantages found both in paper and thermoplastic edging elements.

Finally the thermoplastic nature itself of the above described edging elements make them suitable in "Soft forming" and "Membrane plating" operations.

## Claims

1. A process for manufacturing synthetic edging elements for panels, **characterized by** successively providing the steps of:
- mixing, in a dynamic mixer, a basic compound made up of HiPS, high impact, shock proof polystyrene, in a range between 55% and 65% by weight and Crystal Polystyrene in a range between 35% and 45% by weight; further to said base, a variable percentage of "master colour" is added;
- extruding and calandering on an extrusion line specifically designed for styrene; in this process step, reels having diameter ranging from 650 mm to 750 mm, height between 650 mm and 700 mm and thickness between 0,1 mm and 2 mm. are obtained;
- decor printing, which can be of wood imitation type and for which a gravure or flexographic type machine is used;
- finishing by an embossing-painting machine is used; during this step, a thin acrylic paint layer is applied onto the print to ensure protection against chemical agents and scratches and the emboss process impresses a mechanic finish which can be orange-peel type, wax effect or wood pore imitation; as for the painting, transparent paints having different and predetermined brightness degrees chosen by the customer are used;
- spreading during which a specific coating or "primer" is applied on their lower surface; the primer will allow the user to glue the finished product, cut into rolls, by means of EVA glues based on Ethylene Vinyl Acetate" or polyurethane glues;
- cutting the reels into "rolls" of different heights according to the customer's requests depending on the height of the panels to be edged.

2. A process for manufacturing synthetic edging elements for panels, according to claim 1, **characterized in that** it provides the following alternative:
- adding to the basic polymeric compound an amount of Calcium Carbonate corresponding to 20% - 40% by weight of the polymeric compound used.

3. A process for manufacturing synthetic edging elements for panels, according to claim 1, **characterized in that** it provides the following alternatives:
- the base material is obtained by mixing in a dynamic mixer from 45% to 55% by weight of ABS, that is "Acrylonitrile butadiene Styrene", and from 45% to 55% by weight of SAN, that is "Styrene Acrylonitrile";
- this mixture is charged with 20% - 40% by weight of Talcum by means of a rotary twin-screw extruder having a screw contour allowing for the mineral charge dispersion; finally, a variable percentage of master colour according to the item manufactured is added.

4. A synthetic edging element for panels manufactured according to one of the processes stated in the preceding claims, **characterized by** comprising a HiPS and crystal styrene base polymeric matrix in percentages from 40% to 60% by weight.

5. A synthetic edging element for panels according to claim 4, **characterized by** the following alternative:
- said edging element can be further charged with an inert filler of Calcium carbonate in a percentage from 20% to 40% by weight of the basic polymeric compound used.

6. A synthetic edging element for panels according to the preceding claims, **characterized by** the following alternatives:
- HiPS component is replaced with ABS component leaving weight percentages unchanged;
- Crystal Polystyrene is replaced with SAN leaving weight percentages unchanged.

7. A synthetic edging element for panels according to claim 6, **characterized by** the following alternative:
- the inert filler consisting in Calcium Carbonate is replaced with Talcum in the same weight percentage.
